# EUROPÄISCHE PATENTSCHRIFT

(11) **EP 3 003 764 B1**
(45) Veröffentlichungstag und Bekanntmachung des Hinweises auf die Patenterteilung: **09.08.2017**
(21) Anmeldenummer: 14728837.7
(22) Anmeldetag: 05.06.2014
(51) Int. Cl.: B60K 17/342

(54) **ANTRIEBSVORRICHTUNG FÜR ALLRADGETRIEBENE KRAFTFAHRZEUGE**
DRIVE DEVICE FOR ALL-WHEEL-DRIVE MOTOR VEHICLES
DISPOSITIF MOTOPROPULSEUR POUR VÉHICULES AUTOMOBILES À TRANSMISSION INTÉGRALE

(30) Priorität: 07.06.2013 DE 102013009540
(43) Veröffentlichungstag der Anmeldung: 13.04.2016
(73) Patentinhaber: Audi AG, 85045 Ingolstadt (DE)
(72) Erfinder: MEIXNER, Christian, 85049 Ingolstadt (DE)
(74) Vertreter: Lehle, Josef
(86) Internationale Anmeldenummer: PCT/EP2014/001530
(87) Internationale Veröffentlichungsnummer: WO 2014/195021

(56) Entgegenhaltungen:
- FR-A- 1 367 891
- FR-A1- 2 258 971
- GB-A- 295 820
- US-A- 2 802 539
- US-A- 5 337 849

## Beschreibung

Die vorliegende Erfindung betrifft eine Antriebsvorrichtung für allradgetriebene Kraftfahrzeuge gemäß dem Oberbegriff des Patentanspruchs 1.

Allradantriebe für Kraftfahrzeuge, insbesondere Personenkraftfahrzeuge, lassen sich grob unterteilen in permanente Antriebe mit zwei Achsdifferenzialen und einem Zwischenachsdifferenzial (zur Vermeidung von Antriebsverspannungen) und in sogenannte Hang-on Antriebe mit einer unmittelbar von dem Antriebsaggregat angetriebenen Primärachse und einer über eine Kupplung (zum Beispiel eine Viscokupplung oder eine Haldexkupplung) bei Antriebsschlupf zuschaltbaren Sekundärachse. Die Primärachse bzw. die Sekundärachse können dabei die Vorderachse oder die Hinterachse des Kraftfahrzeugs sein.

Durch die JP 2005 035 379 A1 ist eine Antriebsvorrichtung bekannt, bei der der Antrieb der Sekundärachse des Kraftfahrzeugs über einen Zahnriementrieb als Übertragungsmittel von der Primärachse zur Sekundärachse erfolgt. Die Differenziale der beiden Achsen sind in üblicher Weise koaxial zu den auf die Räder abtreibenden Antriebswellen angeordnet. Ferner ist eine steuerbare Kupplung vorgesehen, über die der Kraftfluss zur Sekundärachse zur Erzielung zum Beispiel nur eines Frontantriebs des Kraftfahrzeugs unterbrechbar ist.

Aus der WO 81/03150 ist zudem eine Antriebsvorrichtung bekannt, bei der eine Sekundärachse über zwei seitliche Umschlingungstriebe von der über ein Antriebsaggregat angetriebenen Primärachse des Kraftfahrzeugs bzw. deren auf die Räder abtreibenden Antriebswellen beaufschlagt ist. Über das einzige Achsdifferenzial nur an der Primärachse können jedoch Drehzahlunterschiede der Räder insbesondere beim Durchfahren von Kurven nicht zufriedenstellend ausgeglichen werden.

Aus der FR 1 367 891 A ist eine gattungsgemäße Antriebsvorrichtung für allradgetriebene Kraftfahrzeuge bekannt. Diese weist eine von einem Antriebsaggregat über ein Achsdifferenzial angetriebene Primärachse und eine über die links- und rechtsseitigen Abtriebselemente des Achsdifferenzials und Übertragungsmitteln angetriebene Antriebswellen (5) der Sekundärachse auf. Aus der US 2 802 539 A, der GB 295 820 A, der FR 2 258 971 A1 und der US 5 337 849 A sind ebenfalls Antriebsvorrichtungen für allradgetriebene Kraftfahrzeuge bekannt.

Aufgabe der Erfindung ist es, eine Antriebsvorrichtung der gattungsgemäßen Art anzugeben, die baulich kompakt ausgeführt ist und die insbesondere größere, konstruktive Freiheitsgrade zu deren Anordnung in einem Kraftfahrzeug und in der fahrdynamischen Auslegung bietet.

Die Lösung dieser Aufgabe gelingt mit den Merkmalen des Patentanspruchs 1. Vorteilhafte Weiterbildungen und Ausgestaltungen der Erfindung sind Gegenstand der abhängigen Ansprüche.

Erfindungsgemäß wird vorgeschlagen, dass die Übertragungsmittel durch zumindest zwei Schaltelemente gebildet sind, die koaxial zum Achsdifferenzial der Primärachse angeordnet sind und die über Umschlingungstriebe auf die linke und rechte Antriebswelle der Sekundärachse wirken. Durch diese Maßnahme gelingt es, mit nur einem Achsdifferenzial bei einer baulich kompakten Konstruktion einen perfekten Drehzahlausgleich und eine variable Antriebsmomentenverteilung, insbesondere beim Durchfahren von Kurven, bei einem Antriebsschlupf der Primärachse und bei fahrdynamisch kritischen Situationen des Kraftfahrzeugs, herzustellen. Ferner kann über die Auslegung der Umschlingungstriebe die räumliche Anordnung des Antriebsaggregats und damit verbunden die Achsgewichtsverteilung des Kraftfahrzeugs günstig beeinflusst werden.

Die Begrifflichkeit Schaltelement ist hier in einem umfassenden Sinne zu verstehen und soll grundsätzlich jedwede geeignete Koppeleinrichtung bzw. jedwede geeignete Schalteinrichtung umfassen, mit der die erfindungsgemäß gewünschte Funktion und Wirkung erzielt werden kann. Bevorzugt sind die Schaltelemente als Kupplung ausgebildet, insbesondere als Hang-on Kupplung ausgebildet, mittels der eine Achse der Antriebsvorrichtung trieblich gesehen angehängt (engl. "hang-on") werden kann. Die dem Achsdifferenzial zugeordneten Schaltelemente können zum Beispiel hydraulisch steuerbare Lamellenkupplungen sein und/oder so ausgebildet sein, dass diese bei definierten Drehzahldifferenzen zwischen der Primärachse und der Sekundärachse automatisch schließen bzw. dass diese die Sekundärachse trieblich mit der Primärachse koppein.

Die Umschlingungstriebe können als Kettentriebe oder vorzugsweise als geräuscharme Zahnriementriebe ausgeführt sein. Bei größeren Übertragungsstrecken können dabei Zwischenräder, Umlenkräder, etc. in den Triebgehäusen zur Stabilisierung und Anpassung der Umschlingungstriebe an gegebene Bauraumverhältnisse vorgesehen sein.

Des Weiteren können in die die Räder der Sekundärachse antreibenden Antriebswellen steuerbare Schalteinrichtungen, insbesondere Schaltkupplungen, integriert sein, mittels denen die Übertragungsmittel stillsetzbar sind, sofern die primärachsenseitigen Schaltelemente geöffnet sind bzw. werden. Die bevorzugt durch Kupplungen gebildeten Schalteinrichtungen können hydraulisch beaufschlagbare Lamellenkupplungen oder formschlüssig wirkende Klauenkupplungen oder auch Synchronkupplungen sein.

In einer baulich und fertigungstechnisch günstigen, weiteren Ausgestaltung der Erfindung können die, vorzugsweise durch zwei Kupplungen gebildeten, Schaltelemente an der Primärachse als Doppelkupplung ausgeführt sein, deren zwei doppelkupplungsseitige Antriebselemente mit zwei abtreibenden Abtriebselementen des als Planetengetriebe ausgeführten Achsdifferenzials trieblich verbunden sind und deren zwei doppelkupplungsseitige Abtriebselemente auf die Antriebselemente der unmittelbar einander benachbarten Umschlingungstriebe geschaltet sind.

Das Achsdifferenzial der Primärachse kann ferner als Planetengetriebe ausgeführt in das Antriebsaggregat integriert sein, wobei die Schaltelemente und die Antriebselemente der Umschlingungstriebe koaxial zu den Antriebswellen der Primärachse an einer Seite des Antriebsaggregats angeordnet sind. Diese Auslegung eignet sich besonders für Kraftfahrzeuge mit frontseitig oder heckseitig quer eingebautem Antriebsaggregat oder für Antriebsaggregate mit Längseinbau und zwischen der antreibenden Brennkraftmaschine und nachgeschaltetem Geschwindigkeits-Wechselgetriebe integriertem Achsdifferenzial, an das dann einerseits lediglich die Schaltelemente und die Antriebselemente der Umschlingungstriebe bzw. die Riemenräder der Zahnriementriebe anzubauen sind.

Alternativ können die vorzugsweise zwei Schaltelemente und die Umschlingungstriebe beiderseits des Achsdifferenzials positioniert sein und räumlich getrennt auf die Umschlingungstriebe abtreiben. Anstelle eines Planetengetriebes als Achsdifferenzial kann dann gegebenenfalls ein Kegelrad-Differenzial eingesetzt werden. Die Schaltelemente sind auch hier bevorzugt durch Kupplungen, insbesondere durch zwei separate Kupplungen, gebildet.

Des Weiteren wird für Kraftfahrzeuge mit frontseitigem Antriebsaggregat oder in Mittelmotoranordnung und heckseitiger Primärachse vorgeschlagen, dass das Achsdifferenzial und die koaxialen Schaltelemente in einem Achsgehäuse der Primärachse angeordnet sind und dass das Achsdifferenzial über eine Ausgangswelle des Antriebsaggregats (zum Beispiel eine Kardanwelle) angetrieben ist, wobei ferner die beiden Umschlingungstriebe beiderseits an dem Antriebsaggregat vorbei zur Sekundärachse geführt sind. Dementsprechend kann die Sekundärachse geteilt mit einer links- und rechtsseitigen Antriebswelle ausgeführt sein und behindert nicht die Anordnung des gegebenenfalls dazwischen liegenden Antriebsaggregats. Das Achsgehäuse der Primärachse kann ferner relativ symmetrisch bzw. mittig des Kraftfahrzeugs positioniert sein.

In einer vorteilhaften Weiterbildung der Erfindung können den Umschlingungstrieben bzw. den Zahnriementrieben antriebsseitig jeweils ein Übersetzungsgetriebe ins Schnelle und abtriebsseitig ein Übersetzungsgetriebe ins Langsame zugeordnet sein. Dadurch wird die Zugbelastung der Umschlingungstriebe gezielt reduziert, an den Antriebswellen der Sekundärachse aber wieder Drehzahlgleichheit zumindest im Wesentlichen hergestellt.

Die Übersetzungsgetriebe können dabei bevorzugt aus zu den Antriebswellen der Primärachse und der Sekundärachse koaxialen Planetengetrieben bestehen, deren Außenräder gehäusefest ausgeführt sind und deren Antriebselemente und Abtriebselemente durch den Steg und das Sonnenrad gebildet sind. Derartige Planetengetriebe sind baulich kompakt und robust ausführbar und weisen günstige Getriebewirkungsgrade auf.

Die Übersetzungsverhältnisse der Übersetzungsgetriebe an der Primärachse und an der Sekundärachse können so ausgelegt sein, dass bei regulärer Geradeausfahrt des Kraftfahrzeugs die Antriebswellen der heckseitigen Achse geringfügig schneller als die Antriebswellen der frontseitigen Achse drehen. Dies bewirkt bei einer frontseitigen Primärachse des Kraftfahrzeugs fahrdynamisch vorteilhaft, dass durch Schließen der Schaltelemente bzw. durch Zuschalten der Sekundärachse beim Durchfahren von Kurven dem kurvenäußeren Vorderrad Antriebsmoment entzogen und damit verbunden dessen Seitenführungskraft erhöht wird.

Schließlich können in einer alternativen Ausgestaltung der Erfindung anstelle von Kupplungen die als Planetengetriebe ausgeführten zwei Übersetzungsgetriebe als Schaltelemente an der Primärachse ausgelegt sein, deren Stege über die Abtriebselemente des koaxialen Achsdifferenzials angetrieben sind, deren Sonnenräder auf die Antriebselemente der Umschlingungstriebe abtreiben und deren Außenräder über gehäuseseitige Bremsen festbremsbar bzw. lösbar sind. Der Kraftfluss auf die Sekundärachse kann somit durch Festbremsen der Außenräder der Übersetzungsgetriebe hergestellt oder durch Lösen der Bremsen mehr oder minder unterbrochen werden. Die Bremsen können bevorzugt hydraulisch gesteuert sein.

Erfindungsgemäß ist weiter ein Verfahren zum Betreiben einer Antriebsvorrichtung mit einem oder mehreren der zuvor beschriebenen und/oder in den Vorrichtungsansprüchen beanspruchten Merkmal(e) vorgesehen, wobei bezüglich der sich dadurch ergebenden Vorteile auf die vorstehenden Ausführungen verwiesen wird.

Mehrere Ausführungsbeispiele der Erfindung sind im Folgenden anhand der beigefügten Zeichnung bzw. Blockschaltbilder näher erläutert. Es zeigen:
- Fig. 1: eine Antriebsvorrichtung für allradgetriebene Kraftfahrzeuge, mit einem quer eingebauten, frontseitigen Antriebsaggregat mit integriertem Achsdifferenzial der Primärachse und zwei zu einer Doppelkupplung zusammengebauten Hang-on Kupplungen, die über Zahnriementriebe auf eine heckseitige Sekundärachse abtreiben;
- Fig. 2: eine Antriebsvorrichtung mit Längseinbau des Antriebsaggregats und seitlich an das integrierte Achsdifferenzial der Primärachse angebauten, als Doppelkupplung ausgeführten Hang-on Kupplungen, die wiederum über zwei seitliche Zahnriementriebe die heckseitige Sekundärachse antreiben;
- Fig. 3: eine zur Fig. 2 alternative Antriebsvorrichtung, mit zwei separaten, beiderseits des längs eingebauten Antriebsaggregats angeordneten Hang-on Kupplungen, die auf die heckseitige und zweigeteilte Sekundärachse abtreiben;
- Fig. 4: eine weitere Antriebsvorrichtung mit heckseitiger Primärachse, deren Achsdifferenzial über das längseingebaute Antriebsaggregat angetrieben ist und die über zwei separate Hang-on Kupplungen und beidseitig angeordnete Zahnriementriebe mit der vorne liegenden, zweigeteilten Sekundärachse trieblich verbunden ist;
- Fig. 5: eine zur Fig. 1 alternative Antriebsvorrichtung mit quer eingebautem Antriebsaggregat und mit abtriebsseitig zwischen die Doppelkupplung und die Zahnriementriebe eingesetzten Übersetzungsgetrieben;
- Fig. 6: die Antriebsvorrichtung nach Fig. 5 mit beiderseits der Übersetzungsgetriebe positionierten, separaten Hang-on Kupplungen; und
- Fig. 7: eine zu den vorstehenden Figuren alternative Antriebsvorrichtung an einem quer eingebauten Antriebsaggregat, dessen Achsdifferenzial über als Planetengetriebe ausgeführte Übersetzungsgetriebe auf die Zahnriementriebe abtreibt, wobei der Kraftfluss mittels integrierter Schaltelemente bzw. mittels Bremsen steuerbar ist.

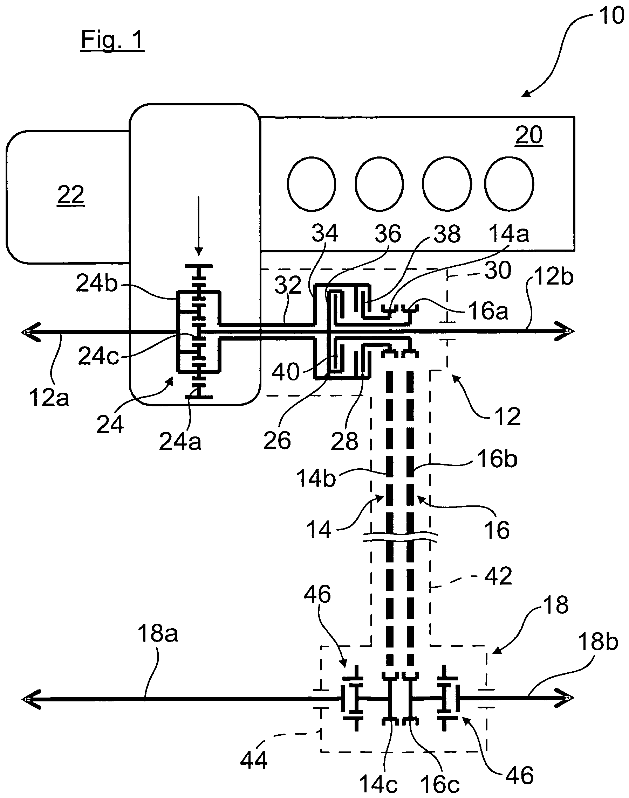

In der Fig. 1 ist grob schematisch eine Antriebsvorrichtung für ein allradgetriebenes Kraftfahrzeug mit einem frontseitig quer eingebauten Antriebsaggregat 10 dargestellt, das eine Vorderachse bzw. Primärachse 12 und eine über die Primärachse durch Übertragungsmittel bzw. hier beispielhaft zwei Zahnriementriebe 14, 16 eine Hinterachse bzw. Sekundärachse 18 des Kraftfahrzeugs antreibt.

Das Antriebsaggregat 10 setzt sich im Wesentlichen aus einer Brennkraftmaschine 20 (dies könnte auch eine andere Antriebsmaschine, zum Beispiel eine Elektromaschine sein), einem Geschwindigkeits-Wechselgetriebe 22 und einem integrierten Planetengetriebe-Achsdifferenzial 24 zusammen. Das Achsdifferenzial 24 treibt in bekannter Weise die Vorderräder (nicht dargestellt) der Primärachse 12 des Kraftfahrzeugs über Antriebswellen 12a, 12b an. Dabei ist das Außenrad 24a des Planetengetriebes wie mit einem Pfeil angedeutet angetrieben, während die Abtriebselemente der Steg 24b und das Sonnenrad 24c sind, die mit den Antriebswellen 12a und 12b entsprechend verbunden sind.

An das Antriebsaggregat 10 bzw. an das Achsdifferenzial 24 schließen koaxial zwei zu einer Doppelkupplung zusammengebaute Hang-on Kupplungen 26, 28 (zum Beispiel Haldexkupplungen als in einem umfassenden Sinne zu verstehende schlupfgesteuerte Lamellenkupplungen) an, die in einem an das Gehäuse des Achsdifferenzials 24 angeflanschtem Gehäuse 30 (in gestrichelten Linien angedeutet) entsprechend gelagert und an dessen Schmierölsystem angeschlossen sind.

Dabei ist das Gehäuse 34 der Kupplung 28 über eine Hohlwelle 32 an den Steg 24b des Achsdifferenzials 24 angeschlossen, während das radial innenliegende Gehäuse 36 der Kupplung 26 mit dem Sonnenrad 24c bzw. mit der Antriebswelle 12b verbunden ist.

Die Abtriebselemente 38, 40 der Doppelkupplung 26, 28 sind über entsprechende Hohlwellen (ohne Bezugszeichen) mit den axial benachbarten Riemenrädern 14a, 16a der Zahnriementriebe 14, 16 trieblich verbunden.

Die von den Riemenrädern 14a, 16a abgehenden und in einem Gehäuse 42 geführten Zahnriemen 14b, 16b wirken mit in dem Achsgehäuse 44 der Sekundärachse 18 gelagerten Riemenrädern 14c, 16c zusammen. Die Riemenräder 14c, 16c treiben dabei auf die unterschiedlich langen Antriebswellen 18a, 18b bzw. auf die Hinterräder des Kraftfahrzeugs ab.

Innerhalb des Achsgehäuses 44 sind auf den Antriebswellen 18a, 18b Kupplungen 46, zum Beispiel Klauenkupplungen 46, angeordnet, mittels denen die Antriebswellen 18a, 18b einzeln oder gleichzeitig über nicht dargestellte Schalteinrichtungen von den Zahnriementrieben 14, 16 abkoppelbar sind. Anstelle von Klauenkupplungen könnten alternativ aber auch aus Schaltgetrieben bekannte Synchronkupplungen oder hydraulisch steuerbare Lamellenkupplungen verwendet sein, um nur einige weitere Beispiele für derartige Schalteinrichtungen zu nennen.

Im regulären Fahrbetrieb ohne Drehzahlunterschiede an den Rädern zwischen der Primärachse 12 und der Sekundärachse 18 des Kraftfahrzeugs ist nur die Primärachse 12 angetrieben (im Ausführungsbeispiel Frontantrieb), während die Sekundärachse 18 lastlos mitläuft oder, insbesondere aus energetischen Gründen, stillgesetzt ist, nämlich durch Stillsetzen der Zahnriementriebe 14, 16. Zum Hochbeschleunigen bzw. Anhängen der stillgesetzten Zahnriementriebe 14, 16 werden die Kupplungen 26, 28 in einem definierten Maße, vorzugsweise leicht, geschlossen, danach die hier beispielhaft durch Kupplungen 46 gebildeten Schalteinrichtungen, in etwa bei Drehzahlgleichheit, geschlossen und dann erst das Drehmoment zur Sekundärachse 18 übertragen. Das heißt, bei Drehzahlunterschieden zwischen der Primärachse 12 und der Sekundärachse 18 schließt je nach Fahrsituation eine der Hang-on Kupplungen 26, 28 oder es schließen beide Hang-on Kupplungen 26, 28 und es wird je nach Kupplungsauslegung mehr oder weniger Drehmoment über die Zahnriementriebe 14, 16 auf das eine oder auf beide Hinterräder bzw. auf die Antriebswellen 18a, 18b der Sekundärachse 18 umverteilt.

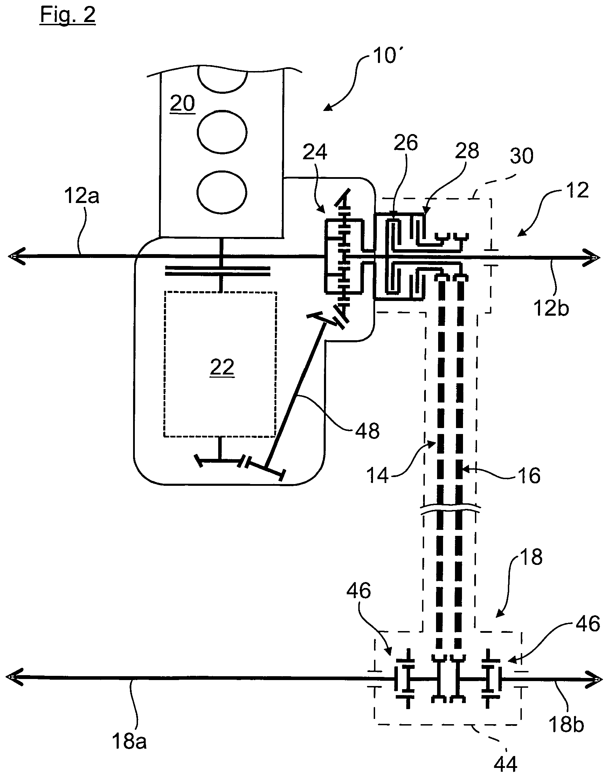

Die Fig. 2 bis 7 stellen alternative Antriebsvorrichtungen für Kraftfahrzeuge dar. Funktionell gleiche Teile sind mit gleichen Bezugszeichen versehen. Zur Vermeidung von Wiederholungen werden jeweils nur die relevanten Unterschiede beschrieben.

Im Ausführungsbeispiel der Fig. 2 ist das längs in das Kraftfahrzeug eingebaute Antriebsaggregat 10' mit Brennkraftmaschine 20 und einem Geschwindigkeits-Wechselgetriebe 22 frontseitig angeordnet. Das in das Antriebsaggregat 10' integrierte Planetengetriebe-Achsdifferenzial 24 ist seitlich positioniert und wird über eine Abtriebswelle 48 des Wechselgetriebes 22 in bekannter Weise angetrieben.

Das Achsdifferenzial 24 treibt wie vorbeschrieben auf die Antriebswellen 12a, 12b der Primärachse 12 bzw. auf die einerseits angebaute Doppelkupplung 26, 28 und diese auf die Zahnriementriebe 14, 16 ab. Die Zahnriementriebe 14, 16 wirken wiederum wie vorbeschrieben auf die Hinterachse bzw. die Sekundärachse 18 des Kraftfahrzeugs.

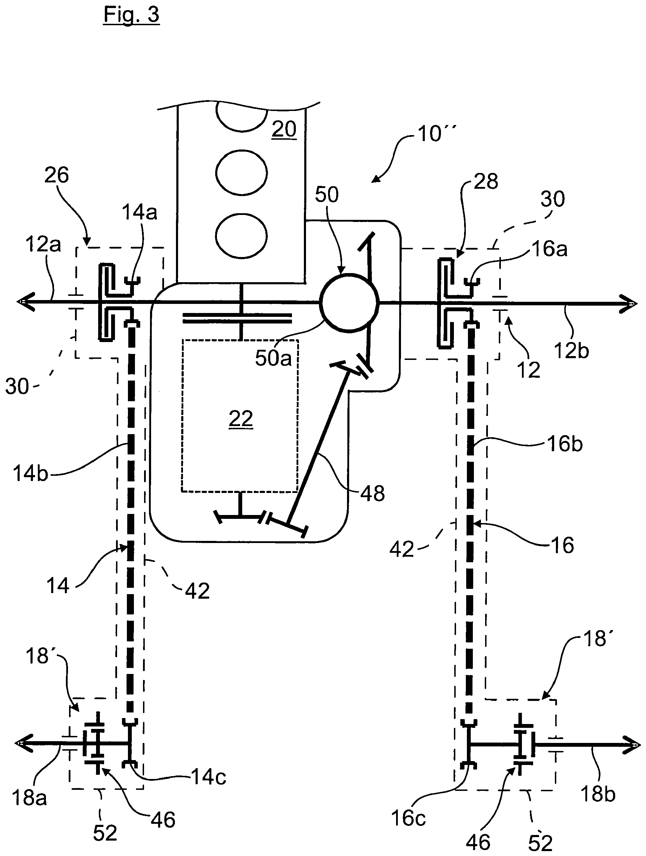

Die Fig. 3 zeigt eine zur Fig. 2 alternative Antriebsvorrichtung an dem längs eingebauten Antriebsaggregat 10", bei der die separaten Hang-on Kupplungen 26, 28 koaxial beiderseits des Antriebsaggregats 10" an der Primärachse 12 angeordnet und an die Antriebswellen 12a, 12b angekoppelt sind.

Dabei ist das in das Antriebsaggregat 10" integrierte Achsdifferenzial 50 als Kegelraddifferenzial ausgebildet, das über die Abtriebswelle 48 angetrieben ist und das in bekannter Weise über die in dessen Ausgleichsgehäuse 50a eingesetzten Achskegelräder (nicht dargestellt) auf die Antriebswellen 12a, 12b abtreibt.

Die Hang-on Kupplungen 26, 28 wirken wie vorbeschrieben auf die beiderseits des Antriebsaggregats 10" positionierten Zahnriementriebe 14, 16 und diese auf die Antriebswellen 18a, 18b der zweigeteilten Sekundärachse 18' mit separaten Achsgehäusen 52.

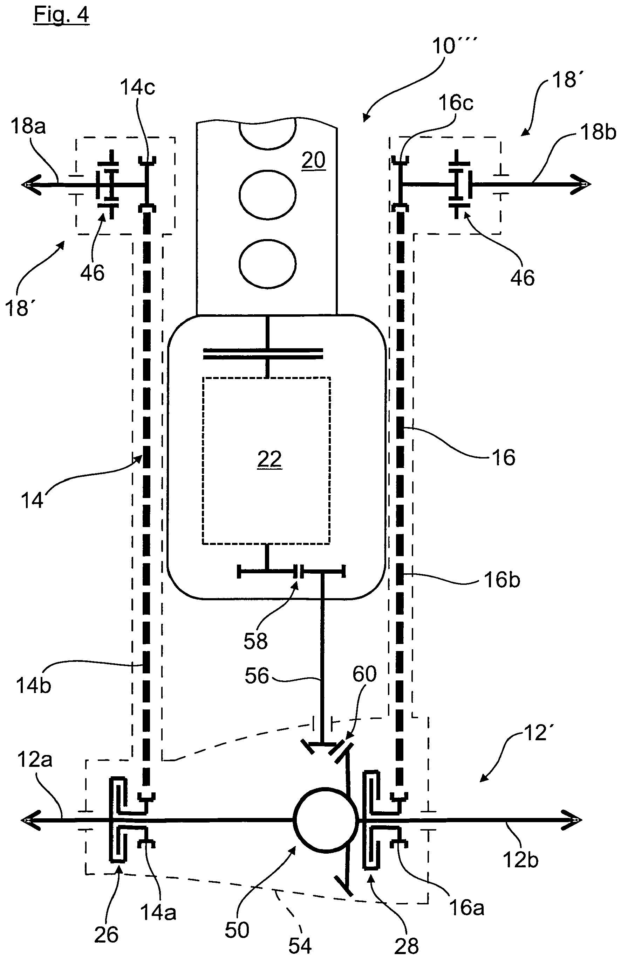

Das Ausführungsbeispiel der Erfindung gemäß Fig. 4 stellt eine weitere, alternative Antriebsvorrichtung für ein Kraftfahrzeug ebenfalls mit Längseinbau des Antriebsaggregats 10'" dar.

Dabei ist das Antriebsaggregat 10'" mit Brennkraftmaschine 20 und einem Geschwindigkeits-Wechselgetriebe 22 frontseitig des Kraftfahrzeugs angeordnet und es bildet die Hinterachse die Primärachse 12', während die Vorderachse die über die Primärachse 12' angetriebene, zweigeteilte Sekundärachse 18' darstellt.

Im Achsgehäuse 54 der Primärachse 12' sind das Kegelrad-Achsdifferenzial 50 und beidseitig die separat ausgeführten Hang-on Kupplungen 26, 28 angeordnet und im Wesentlichen wie vorstehend zur Fig. 3 beschrieben ausgeführt.

Das Achsdifferenzial 50 wird jedoch über eine in Fahrzeuglängsrichtung ausgerichtete Ausgangswelle 56 (zum Beispiel eine Kardanwelle) des Wechselgetriebes 22 angetrieben, welche Ausgangswelle 56 über einen Stirnradtrieb 58 achsparallel und seitlich versetzt angeordnet und über den Kegelradtrieb 60 auf das Achsdifferenzial 50 abtreibt.

Die das linke Hinterrad des Kraftfahrzeugs antreibende Antriebswelle 12a des Achsdifferenzials 50 ist wie ersichtlich durch die Kupplung 26 und das Riemenrad 14a und die rechte Antriebswelle 12b durch die Kupplung 28 und das Riemenrad 16a hindurch geführt.

Die Gehäuse der Kupplungen 26, 28 sind mit den Antriebswellen 12a, 12b des Achsdifferenzials 50 trieblich verbunden, während deren Abtriebselemente auf die Riemenräder 14a, 16a der seitlich an dem Antriebsaggregat 10'" vorbei geführten Zahnriementriebe 14, 16 wirken. Über die Zahnriemen 14b, 16b mit den Riemenrädern 14c, 16c auf den vorderen Antriebswellen 18a, 18b ist die Sekundärachse 18 mit den in die Antriebswellen 18a, 18b integrierten Kupplungen 46 angetrieben.

Die Funktion der Antriebsvorrichtung gemäß Fig. 4 ist im Wesentlichen gleich der Antriebsvorrichtung nach Fig. 3, mit dem Unterschied, dass die beiden separaten Hang-On Kupplungen 26, 28 beiderseits des Achsdifferenziales 50 und innerhalb eines gemeinsamen, zum Antriebsaggregat 10"' separaten Achsgehäuses 54 angeordnet sind und dass durch die Zweiteilung der vorne positionierten Sekundärachse 18' die Position des Antriebsaggregats 10'" relativ frei wählbar ist und zum Beispiel als Frontaggregat oder in Mittelmotoranordnung auslegbar ist.

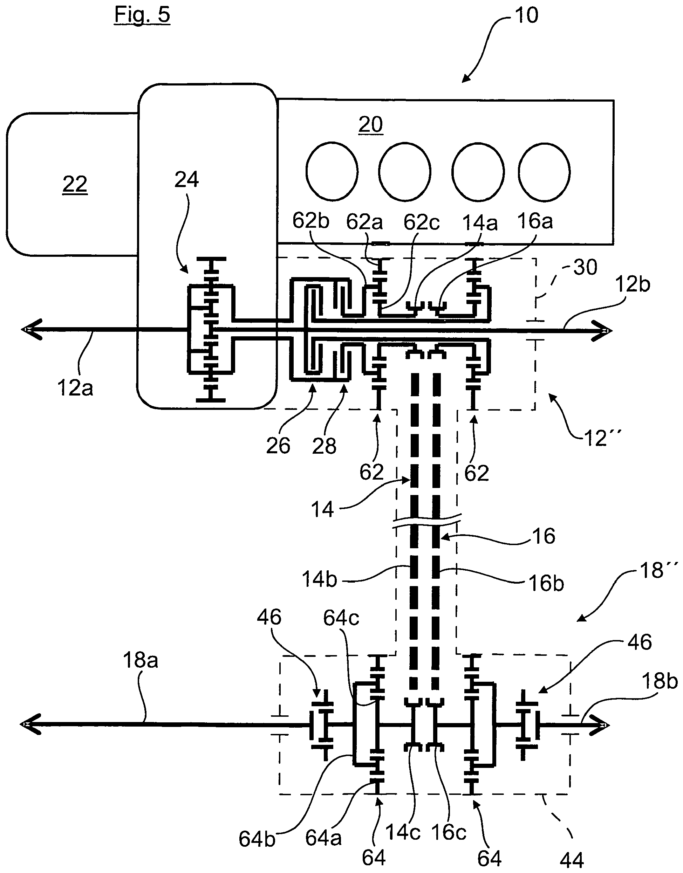

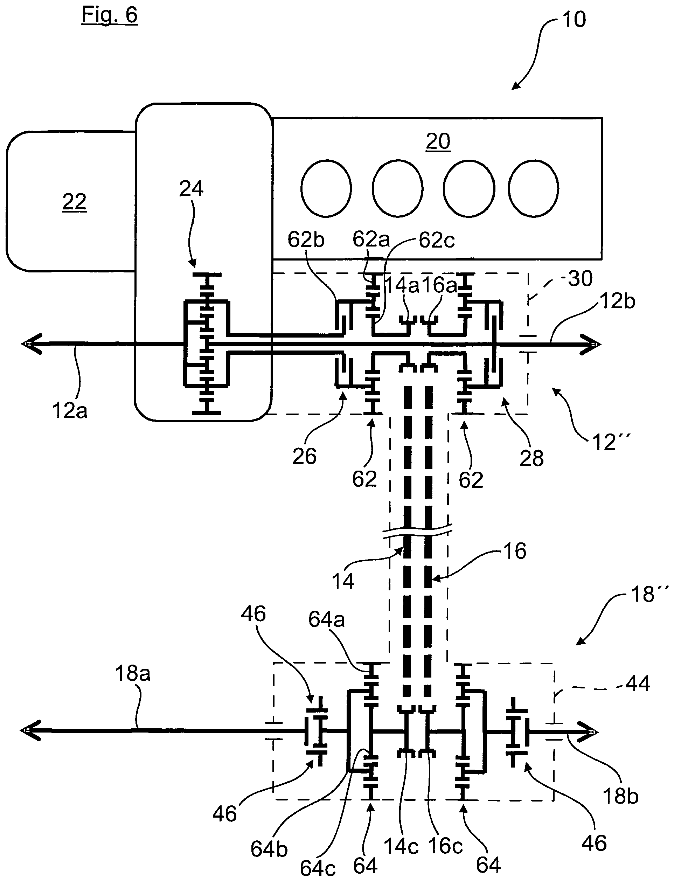

Die Fig. 5 und 6 zeigen eine zur Fig. 1 modifizierte Antriebsvorrichtung mit dem frontseitig (oder heckseitig) quer eingebauten Antriebsaggregat 10. In Fig. 6 sind die koaxial zum in das Wechselgetriebe 22 integrierten Planetengetriebe-Achsdifferenzial 24 angeordneten Hang-On Kupplungen 26, 28 der Primärachse 12" separat ausgeführt und beiderseits der antreibenden Riemenräder 14a, 16a der Zahnriementriebe 14, 16 positioniert, während in Fig. 5 die Hang-on Kupplungen 26, 28 wie in Fig. 1 als Doppelkupplung ausgelegt und einander unmittelbar benachbart angeordnet sind.

Jeweils im Kraftfluss nach den Kupplungen 26, 28 sind als Planetengetriebe ausgelegte, baugleiche Übersetzungsgetriebe 62 vorgesehen, die zu den nachgeschalteten Riemenrädern 14a, 16a eine Übersetzung ins Schnelle bzw. eine Drehmoment- bzw. Zugkraftabsenkung an den Zahnriemen 14b, 16b bewirken.

Dabei sind jeweils die Außenräder 62a der Übersetzungsgetriebe 62 gehäusefest, während die Planetenräder (ohne Bezugszeichen) tragenden Stege 62b mit den Abtriebselementen der Kupplungen 26, 28 gekoppelt sind; die Sonnenräder 62c der Übersetzungsgetriebe 62 sind auf die Riemenräder 14a, 16a der Zahnriementriebe 14, 16 geschaltet.

Die Sekundärachse 18" weicht von der Sekundärachse 18 gemäß Fig. 1 dadurch ab, dass ebenfalls als Planetengetriebe ausgeführte, zueinander baugleiche Übersetzungsgetriebe 64 verwendet sind, die im Kraftfluss zwischen die Riemenräder 14c, 16c und die die Schaltkupplungen 46 aufweisenden Antriebswellen 18a, 18b geschaltet sind und die eine Übersetzung ins Langsame derart bilden, dass zwischen den Antriebswellen 12a, 12b der Primärachse 12" und den Antriebswellen 18a, 18b der Sekundärachse 18" wieder Drehzahlgleichheit (bei regulärer Geradeausfahrt des Kraftfahrzeugs) vorliegt.

Dazu sind die Außenräder 64a der Übersetzungsgetriebe 64 wieder gehäusefest, während die mit den Riemenrädern 14c, 16c gekoppelten Sonnenräder 64c die Antriebselemente bilden und die Planetenräder tragenden, mit den Antriebswellen 18a, 18b trieblich verbundenen Stege 64b die Abtriebselemente der Übersetzungsgetriebe 64 sind.

Die Funktion der Antriebsvorrichtung mit der Primärachse 12", den beiden Hang-On Kupplungen 26, 28, den Zahnriementrieben 14, 16 und der Sekundärachse 18" ist wie zur Fig. 1 beschrieben, wobei durch die Zwischenschaltung der Übersetzungsgetriebe 62, 64 die Belastung der Zahnriementriebe 14, 16 vermindert und diese dementsprechend entweder höhere Antriebsmomente zur Sekundärachse 18" übertragen oder aber auf eine geringere Belastung ausgelegt sein können.

Die Übersetzungsverhältnisse der Übersetzungsgetriebe 62, 64 an der Primärachse 12" und an der Sekundärachse 18" können zudem so ausgelegt sein, dass bei regulärer Geradeausfahrt des Kraftfahrzeugs die Antriebswellen 18a, 18b der heckseitigen Sekundärachse 18" geringfügig schneller als die Antriebswellen 12a, 12b der frontseitigen Primärachse 12" drehen. Dies bewirkt bei einer frontseitigen Primärachse 12" des Kraftfahrzeugs fahrdynamisch vorteilhaft, dass durch Schließen der Schaltelemente bzw. durch Zuschalten der Sekundärachse 18" beim Durchfahren von Kurven dem kurvenäußeren Vorderrad (zum Beispiel der Antriebswelle 12a) Antriebsmoment entzogen und damit verbunden dessen Seitenführungskraft erhöht wird.

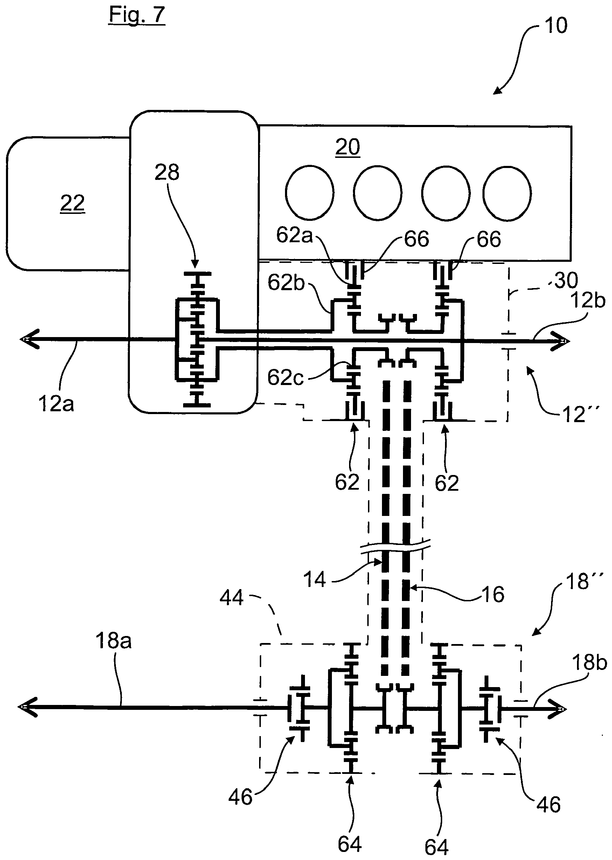

Die Fig. 7 schließlich stellt ein Ausführungsbeispiel der Erfindung ausgehend von Fig. 6 dar, bei dem auf Kupplungen bzw. auf die Hang-on Kupplungen 26, 28 verzichtet ist, indem entsprechende Schaltelemente in den Übersetzungsgetrieben 62 auf der Primärachse 12'" vorgesehen sind, die zum gesteuerten Ankoppeln der Sekundärachse 18" an die Primärachse 12'" dienen.

Die Schaltelemente sind durch am Gehäuse 30 der Primärachse 12'" an den Außenrädern 62a der Übersetzungsgetriebe 62 angeordnete Bremsen 66 gebildet. Die Bremsen 66 können in bekannter Weise Scheibenbremsen oder Lamellenbremsen sein, die im geschlossenen Zustand den Kraftfluss von den direkt antreibenden Stegen 62b zu den abtreibenden Sonnenrädern 62c leiten.

Bei geöffneten Bremsen 66 können die Übersetzungsgetriebe 62, die Zahnriementriebe 14, 16 und die Übersetzungsgetriebe 64 lastlos mitdrehen. Bei zusätzlich geöffneten, hier beispielhaft durch Kupplungen 46, insbesondere durch Klauenkupplungen, gebildeten Schalteinrichtungen können die hier beispielhaft durch Zahnriementriebe 14, 16 gebildeten Umschlingungstriebe stillgesetzt werden.

Die Ankopplung der Sekundärachse 18" an die Primärachse 12'" linksseitig, rechtsseitig oder beidseitig kann bevorzugt hydraulisch durch entsprechende Beaufschlagung der Bremsen 66 abhängig vom Antriebsschlupf an den Rädern der Primärachse 12"' und/oder abhängig von fahrspezifischen Parametern wie Fahrzeuggeschwindigkeit, Lenkwinkel der Vorderräder, etc. erfolgen.

Die Erfindung ist nicht auf die dargestellten Ausführungsbeispiele beschränkt. Insbesondere sind dem Fachmann geläufige Modifikationen zwischen den Fig. 1 bis 7 möglich.

Die Kupplungen 26, 28, die als Doppelkupplung oder separat angeordnet sein können, könnten zum Beispiel als hydraulisch gesteuerte bzw. schlupfgesteuerte Lamellenkupplungen zur Übertragung der Antriebsmomente auf die Sekundärachse 18 ausgelegt sein.

Je nach fahrzeugspezifischer Anordnung des Antriebsaggregats 10 heckseitig, frontseitig oder in Mittelmotorausbildung kann die Sekundärachse 18 als Vorderachse oder als Hinterachse eingesetzt sein. Die Primärachse 12 kann an das Antriebsaggregat 10 angebaut oder als separate Vorder- oder Hinterachse (Fig. 4) ausgeführt sein.

## Patentansprüche

1. Antriebsvorrichtung für allradgetriebene Kraftfahrzeuge, mit einer von einem Antriebsaggregat (10) über ein Achsdifferenzial (24) angetriebenen Primärachse (12) und einer über die links- und rechtsseitigen Abtriebselemente des Achsdifferenzials und Übertragungsmitteln angetriebenen Antriebswellen (12a, 12b) der Sekundärachse (18), **dadurch gekennzeichnet, dass** die Übertragungsmittel durch zumindest zwei Schaltelemente (26, 28; 66) gebildet sind, die koaxial zum Achsdifferenzial (24; 50) der Primärachse (12; 12'; 12"; 12"') angeordnet sind und die über Umschlingungstriebe (14, 16) auf die linke und rechte Antriebswelle (18a, 18b) der Sekundärachse (18; 18'; 18") wirken.

2. Antriebsvorrichtung nach Anspruch 1, **dadurch gekennzeichnet, dass** die Schaltelemente durch Hang-on Kupplungen (26, 28) gebildet sind, insbesondere durch bei Drehzahldifferenzen an den Rädern schließende Hang-On Kupplungen (26, 28) gebildet sind.

3. Antriebsvorrichtung nach Anspruch 1 oder 2, **dadurch gekennzeichnet, dass** die Umschlingungstriebe ein- oder mehrteilige Zahnriementriebe (14, 16) sind.

4. Antriebsvorrichtung nach einem der vorhergehenden Ansprüche, **dadurch gekennzeichnet, dass** in die die Räder der Sekundärachse (18; 18'; 18") antreibenden Antriebswellen (18a, 18b) steuerbare Schalteinrichtungen, insbesondere Kupplungen (44), integriert sind, insbesondere dergestalt, dass mittels diesen Schalteinrichtungen die Umschlingungstriebe (14, 16) bei geöffneten Kupplungen (26, 28) stillsetzbar sind.

5. Antriebsvorrichtung nach einem der vorhergehenden Ansprüche, **dadurch gekennzeichnet, dass** die durch vorzugsweise zwei Kupplungen gebildeten Schaltelemente (26, 28) an der Primärachse (12; 12") als Doppelkupplung ausgeführt sind, deren zwei Antriebselemente (34, 36) mit zwei abtreibenden Abtriebselementen (24b, 24c) des als Planetengetriebe ausgeführten Achsdifferenzials (24) trieblich verbunden sind und deren zwei Abtriebselemente (38, 40) auf die Antriebselemente (14a, 16a) der unmittelbar einander benachbarten Umschlingungstriebe (14, 16) geschaltet sind.

6. Antriebsvorrichtung nach einem der vorhergehenden Ansprüche, **dadurch gekennzeichnet, dass** das Achsdifferenzial (24) der Primärachse (12; 12"; 12"') in das Antriebsaggregat (10) integriert und als Planetengetriebe ausgeführt ist und dass die Schaltelemente (26, 28; 66) und die Antriebselemente (14a, 16a) der Umschlingungstriebe (14, 16) koaxial zu den Antriebswellen (12a, 12b) der Primärachse (12; 12"; 12"') an einer Seite des Antriebsaggregats (10; 10") angeordnet sind.

7. Antriebsvorrichtung nach einem der Ansprüche 1 bis 5, **dadurch gekennzeichnet, dass** das Achsdifferenzial (50) als Kegelrad-Differenzial ausgebildet ist und dass die durch vorzugsweise zwei Kupplungen gebildeten Schaltelemente (26, 28) und die Umschlingungstriebe (14, 16) beiderseits des Achsdifferenzials (50) positioniert sind.

8. Antriebsvorrichtung nach einem der vorhergehenden Ansprüche, **dadurch gekennzeichnet, dass** das Achsdifferenzial (24; 50) und die Schaltelemente (26, 28) in einem Achsgehäuse (54) der Primärachse (12') angeordnet sind und dass das Achsdifferenzial (24; 50) über eine Ausgangswelle (56) des Antriebsaggregats (10"') angetrieben ist, wobei ferner die beiden Umschlingungstriebe (14, 16) beiderseits an dem Antriebsaggregat (10"') vorbei zur Sekundärachse (18') geführt sind.

9. Antriebsvorrichtung nach einem der vorhergehenden Ansprüche, **dadurch gekennzeichnet, dass** den Umschlingungstrieben (14, 16) antriebsseitig jeweils ein Übersetzungsgetriebe (62) ins Schnelle und abtriebsseitig ein Übersetzungsgetriebe (64) ins Langsame zugeordnet sind.

10. Antriebsvorrichtung nach Anspruch 9, **dadurch gekennzeichnet, dass** die Übersetzungsgetriebe (62, 64) aus zu den Antriebswellen (12a, 12b, 18a, 18b) der Primärachse (12") und der Sekundärachse (18") koaxialen Planetengetrieben bestehen, deren Außenräder (62a, 64a) gehäusefest ausgeführt sind und deren Antriebselemente und Abtriebselemente durch den Steg (62b, 64b) und das Sonnenrad (62c, 64c) gebildet sind.

11. Antriebsvorrichtung nach einem der vorhergehenden Ansprüche, **dadurch gekennzeichnet, dass** die Übersetzungsverhältnisse der Übersetzungsgetriebe (62, 64) an der Primärachse (12") und der Sekundärachse (18") so ausgelegt sind, dass bei regulärer Geradeausfahrt des Kraftfahrzeugs die Antriebswellen (12a, 12b, 18a, 18b) der heckseitigen Achse in einem definierten Maße schneller als die Antriebswellen der frontseitigen Achse drehen.

12. Antriebsvorrichtung nach einem der vorhergehenden Ansprüche, **dadurch gekennzeichnet, dass** die zumindest zwei auf die Umschlingungstriebe (14, 16) abtreibenden Schaltelemente durch aus Planetengetrieben ausgeführte Übersetzungsgetriebe (62) an der Primärachse (12"') gebildet sind, deren Stege (62b) über die Abtriebselemente (24b, 24c) des koaxialen Achsdifferenzials (24) angetrieben sind, deren Sonnenräder (62c) auf die Antriebselemente (14a, 16a) der Umschlingungstriebe (14, 16) abtreiben und deren Außenräder (62a) über gehäuseseitige Bremsen (66) festbremsbar sind.

13. Verfahren zum Betreiben einer Antriebsvorrichtung nach einem der vorhergehenden Ansprüche.

## Claims

1. Drive device for all-wheel-drive motor vehicles, having a primary axle (12) which is driven by means of a drive assembly (10) via an axle differential (24) and drive shafts (12a, 12b) of the secondary axle (18) which are driven by means of the left-side and right-side output elements of the axle differential and transmission means, **characterised in that** the transmission means are formed by means of at least two switching elements (26, 28; 66) which are arranged coaxially relative to the axle differential (24; 50) of the primary axle (12; 12'; 12"; 12"') and which act on the left and right drive shaft (18a, 18b) of the secondary axle (18; 18'; 18") by means of continuously variable transmissions (14, 16).

2. Drive device according to claim 1, **characterised in that** the switching elements are formed by means of hang-on couplings (26, 28), in particular by means of hang-on couplings (26, 28) which close in the event of speed differences at the wheels.

3. Drive device according to claim 1 or 2, **characterised in that** the continuously variable transmissions are single-component or multi-component toothed belt drives (14, 16).

4. Drive device according to any one of the preceding claims, **characterised in that** controllable switching devices are integrated into the drive shafts (18a, 18b) which drive the wheels of the secondary axle (18, 18', 18"), in particular couplings (44), in particular in such a manner that by means of these switching devices the continuously variable transmissions (14, 16) can be stopped when the couplings (26, 28) are open.

5. Drive device according to any one of the preceding claims, **characterised in that** the switching elements (26, 28) which are formed by means of preferably two couplings are constructed on the primary axle (12; 12") as a dual coupling whose two drive elements (34, 36) are connected in terms of driving to two power take-off output elements (24b, 24c) of the axle differential (24) which is constructed as a planetary gear and whose two output elements (38, 40) are connected on the drive elements (14a, 16a) of the continuously variable transmissions (14, 16) which are directly adjacent to each other.

6. Drive device according to any one of the preceding claims, **characterised in that** the axle differential (24) of the primary axle (12; 12"; 12"') is integrated in the drive assembly (10) and is constructed as a planetary gear and **in that** the switching elements (26, 28; 66) and the drive elements (14a, 16a) of the continuously variable transmissions (14, 16) are arranged coaxially relative to the drive shafts (12a, 12b) of the primary axle (12' 12"; 12"') at one side of the drive assembly (10; 10").

7. Drive device according to any one of claims 1 to 5, **characterised in that** the axle differential (50) is constructed as a bevel gear differential and **in that** the switching elements (26, 28) which are formed by means of preferably two couplings and the continuously variable transmissions (14, 16) are positioned at both sides of the axle differential (50).

8. Drive device according to any one of the preceding claims, **characterised in that** the axle differential (24; 50) and the switching elements (26, 28) are arranged in an axle housing (54) of the primary axle (12') and **in that** the axle differential (24; 50) is driven by means of an output shaft (56) of the drive assembly (10"'), wherein the two continuously variable transmissions (14, 16) are further guided at both sides past the drive assembly (10"') to the secondary axle (18').

9. Drive device according to any one of the preceding claims, **characterised in that** there are, associated with the continuously variable transmissions (14, 16) at the drive side, a step-up transmission gear (62) and, at the output side, a step-down transmission gear (64), respectively.

10. Drive device according to claim 9, **characterised in that** the transmission gears (62, 64) comprise planetary gears which are coaxial relative to the drive shafts (12a, 12b, 18a, 18b) of the primary axle (12") and the secondary axle (18") and whose outer wheels (62a, 64a) are constructed so as to be secured to the housing and whose drive elements and output elements are formed by means of the web (62b, 64b) and the sun wheel (62c, 64c).

11. Drive device according to any one of the preceding claims, **characterised in that** the transmission ratios of the transmission gears (62, 64) on the primary axle (12") and the secondary axle (18") are configured in such a manner that during regular straight-line travel of the motor vehicle, the drive shafts (12a, 12b, 18a 18b) of the rear-side axle rotate by a defined extent more quickly than the drive shafts of the front-side axle.

12. Drive device according to any one of the preceding claims, **characterised in that** the at least two switching elements taking off power on the continuously variable transmissions (14, 16) are formed by means of transmission gears (62) which are constructed from planetary gears on the primary axle (12"') and whose webs (62b) are driven by means of the output elements (24b, 24c) of the coaxial axle differential (24) and whose sun gears (62c) output on the drive elements (14a, 16a) of the continuously variable transmissions (14, 16) and whose outer wheels (62a) can be firmly braked by means of housing-side brakes (66).

13. Method for operating a drive device according to any one of the preceding claims.

## Revendications

1. Dispositif propulseur pour des véhicules automobiles à transmission intégrale, avec un essieu primaire (12) entraîné par un groupe moteur (10) par l'intermédiaire d'un différentiel d'essieu (24) et avec des arbres d'entraînement (12a, 12b), entraînés par l'intermédiaire d'éléments de sortie côté gauche et côté droit du différentiel d'essieu et de moyens de transmission, de l'essieu secondaire (18), **caractérisé en ce que** les moyens de transmission sont formés par au moins deux éléments d'enclenchement (26, 28 ; 68) qui sont agencés de manière coaxiale par rapport au différentiel d'essieu (24; 50) de l'essieu primaire (12; 12'; 12"; 12"') et qui agissent par l'intermédiaire de mécanismes à enroulement (14, 16) sur les arbres d'entraînement gauche et droit (18a, 18b) de l'essieu secondaire (18; 18'; 18").

2. Dispositif propulseur selon la revendication 1, **caractérisé en ce que** les éléments d'enclenchement sont formés par des embrayages à suspension (26, 28), en particulier par des embrayages à suspension (26, 28) fermant en présence de différences de vitesse de rotation au niveau des roues.

3. Dispositif propulseur selon la revendication 1 ou 2, **caractérisé en ce que** les mécanismes à enroulement sont des transmissions à courroie dentée (14, 16) en une ou plusieurs parties.

4. Dispositif propulseur selon l'une des revendications précédentes, **caractérisé en ce que** des dispositifs d'enclenchement, en particulier des embrayages (44), qui peuvent être commandés sont intégrés dans les arbres d'entraînement (18a, 18b) entraînant les roues de l'essieu secondaire (18; 18'; 18"), en particulier de telle sorte que les mécanismes à enroulement (14, 16) peuvent être immobilisés au moyen de ces dispositifs d'enclenchement lorsque les embrayages (26, 28) sont ouverts.

5. Dispositif propulseur selon l'une des revendications précédentes, **caractérisé en ce que** les éléments d'enclenchement (26, 28) formés par de préférence deux embrayages sont réalisés au niveau de l'essieu primaire (12; 12") comme des embrayages doubles dont les deux éléments d'entraînement (34, 36) sont reliés mécaniquement à deux éléments de sortie (24b, 24c) menés du différentiel d'essieu (24) réalisé sous forme d'engrenages planétaires et dont les deux éléments de sortie (38, 40) sont enclenchés sur les éléments d'entraînement (14a, 16a) des mécanismes à enroulement (14, 16) directement voisins l'un de l'autre.

6. Dispositif propulseur selon l'une des revendications précédentes, **caractérisé en ce que** le différentiel d'essieu (24) de l'essieu primaire (12 ; 12'; 12") est intégré dans le groupe moteur (10) et est réalisé sous forme d'engrenages planétaires et **en ce que** les éléments d'enclenchement (26, 28 ; 66) et les éléments d'entraînement (14a, 16a) des mécanismes à enroulement (14, 16) sont agencés de manière coaxiale par rapport aux arbres d'entraînement (12a, 12b) de l'essieu primaire (12 ; 12"; 12"') d'un côté du groupe moteur (10 ; 10").

7. Dispositif propulseur selon l'une des revendications 1 à 5, **caractérisé en ce que** le différentiel d'essieu (50) est conçu comme un différentiel à roues coniques et **en ce que** les éléments d'enclenchement (26, 28) formés par de préférence deux embrayages et les mécanismes à enroulement (14, 16) sont placés des deux côtés du différentiel d'essieu (50).

8. Dispositif propulseur selon l'une des revendications précédentes, **caractérisé en ce que** le différentiel d'essieu (24, 50) et les éléments d'enclenchement (26, 28) sont agencés dans un carter d'essieu (54) de l'essieu primaire (12') et **en ce que** le différentiel d'essieu (24; 50) est entraîné par l'intermédiaire d'un arbre de sortie (56) du groupe moteur (10'"), les deux mécanismes à enroulement (14, 16) étant guidés en outre des deux côtés du groupe moteur (10"') jusqu'à l'essieu secondaire (18').

9. Dispositif propulseur selon l'une des revendications précédentes, **caractérisé en ce qu'il** est associé aux mécanismes à enroulement (14, 16) un dispositif multiplicateur (62) côté entraînement et un dispositif démultiplicateur (64) côté sortie.

10. Dispositif propulseur selon la revendication 9, **caractérisé en ce que** les dispositifs multiplicateurs ou démultiplicateurs (62, 64) consistent en des engrenages planétaires coaxiaux par rapport aux arbres d'entraînement (12a, 12b, 18a, 18b) de l'essieu primaire (12") et de l'essieu secondaire (18"), engrenages planétaires dont les roues extérieures (62a, 64a) sont réalisées solidaires du carter et dont les éléments d'entraînement et les éléments de sortie sont formés par la traverse (62b, 64b) et par la roue solaire (62c, 64c).

11. Dispositif propulseur selon l'une des revendications précédentes, **caractérisé en ce que** les rapports de multiplication ou démultiplication des dispositifs multiplicateur ou démultiplicateur (62, 64) sont conçus au niveau de l'essieu primaire (12") et de l'essieu secondaire (18") de telle sorte que, lorsque le véhicule automobile avance droit et régulièrement, les arbres d'entraînement (12a, 12b, 18a, 18b) de l'essieu arrière tournent plus vite, d'une valeur définie, que les arbres d'entraînement de l'essieu avant.

12. Dispositif propulseur selon l'une des revendications précédentes, **caractérisé en ce que** les au moins deux éléments d'enclenchement menés en sortie sur les mécanismes à enroulement (14, 16) sont formés au niveau de l'essieu primaire (12"') par des dispositifs multiplicateurs (62) réalisés sous forme d'engranges planétaires dont les traverses (62b) sont entraînées par l'intermédiaire des éléments de sortie (24b, 24c) du différentiel d'essieu (24) coaxial, dont les roues solaires (62c) agissent en sortie sur les éléments d'entraînement (14a, 16a) des mécanismes à enroulement (14, 16) et dont les roues extérieures (62a) peuvent être bloquées par freinage par l'intermédiaire de freins (66) côté carter.

13. Procédé de fonctionnement d'un dispositif propulseur selon l'une des revendications précédentes.
